# EUROPÄISCHE PATENTSCHRIFT

(11) **EP 0 684 271 B1**
(45) Veröffentlichungstag und Bekanntmachung des Hinweises auf die Patenterteilung: **22.09.1999**
(21) Anmeldenummer: 95107105.9
(22) Anmeldetag: 11.05.1995
(51) Int. Cl.: C08G 69/28

(54) **Verfahren zur Herstellung von Polyamiden auf Basis von alpha,omega-Dinitrilen**
Process for the production of polyamides on the basis of alpha,omega-dinitrile
Procédé pour la production de polyamides à base d'alpha,omega-dinitriles

(30) Priorität: 27.05.1994 DE 4418540; 02.11.1994 US 333270
(43) Veröffentlichungstag der Anmeldung: 29.11.1995
(73) Patentinhaber: Lurgi Zimmer Aktiengesellschaft, 60388 Frankfurt am Main (DE)
(72) Erfinder: Liehr, Hartmut, Dr., D-60388 Frankfurt / Main (DE)

(56) Entgegenhaltungen:
- EP-A- 0 093 481
- EP-A- 0 197 657
- US-A- 4 739 035
- US-A- 4 749 776

## Beschreibung

Die Erfindung betrifft die zweistufige Herstellung von Polyamiden aus α,ώ-Dinitrilen und α,ώ-Diaminen in Gegenwart von Wasser und einer Phosphor-Sauerstoff-Verbindung als Katalysator sowie eines Co-Katalysators. Insbesondere bezieht sich die Erfindung auf die Herstellung von zu hochwertigen Fasern verarbeitbarem Polyamid-6.6 aus Adiponitril und Hexamethylendiamin.

Polyamide vom Typ Polyamid-6.6 werden kommerziell aus Dicarbonsäure und Diamin, z. B. Adipinsäure und Hexamethylendiamin, hergestellt. Hexamethylendiamin wird durch Hydrierung von Adiponitril, welches aus Propylen oder Acrylnitril preiswert herzustellen ist, erhalten. Adipinsäure wird in einem vielstufigen, kostenintensiven Prozeß durch Oxidation von Aromaten hergestellt, da die Hydrolyse des Adiponitrils mit konzentrierten starken Mineralsäuren zu Adipinsäure (GB-Patent 1 240 410) mit zu vielen Schwierigkeiten verbunden ist.

Als wirtschaftlich günstigere Alternative wurde bereits vorgeschlagen, Adiponitril direkt mit Hexamethylendiamin in Gegenwart von Wasser und eines Katalysators, z. B. einer Phosphor-Sauerstoff-Verbindung, in einer kombinierten Hydrolyse-Polykondensationsreaktion zu Polyamid-6.6 umzusetzen (US-Patente 4 436 898, 4 490 521 und 4 749 776).

Eine Beschleunigung der Hydrolyse-Stufe soll durch einen zusätzlichen Co-Katalysator wie Kupferverbindungen (US-Patent 4 725 666) oder Molybdän-Verbindungen (US-Patent 4 542 205) erreicht werden. Auch Verbindungen von Ruthenium, Rhodium, Osmium, Nickel (Chemical Abstracts 108 (14): 113198 n zu JP 61-205221 A) oder Bor (US-Patent 4 603 192) sind als Co-Katalysator bekannt. Niedermolekulares Polyamid-6.6 wird auch durch nicht-katalytische Umsetzung in wäßriger Phase von Hexamethylendiamin mit einem Gemisch aus Adiponitril und z. B. 10 Mol.-% Adipinsäure erhalten (Chemical Abstracts 100 (14): 104090 d zu JP 58-173129 A). Alle diese Verfahren benutzen die aliphatischen Diamine als Reaktanden bei der basischen Hydrolyse des Dinitrils, die aufgrund der gegenüber Ammoniak (Nebenprodukt) größeren Basizität der Diamine zufriedenstellend verläuft. Der gravierende Nachteil dieser Verfahrensweise aber ist, daß die Diamine, und insbesondere das Hexamethylendiamin, unter den notwendigen Reaktionsbedingungen der Hydrolyse (Temperaturen von etwa 260 °C, Druck über 20 bar) und den langen Verweilzeiten von mindestens 180 Minuten, z. T. dimerisiert und das dabei entstehende ώώ'-Diaminodihexylamin (Triamin) als Vernetzer der Molekülketten wirkt und der dadurch verursachte Gelgehalt die Polymerqualität erheblich beeinträchtigt. Die Konzentration an Triaminen in diesen Polymerprodukten ist so groß, daß ein ordnungsgemäßes Verspinnen und Verstrecken der Filamente aufgrund von Abrissen und Knoten nicht oder nur eingeschränkt gewährleistet ist. Dies ist auch der Grund, daß sich diese Verfahren großtechnisch bisher nicht haben durchsetzen lassen.

Um diese Nebenreaktionen möglichst gering zu halten, wurde bereits vorgeschlagen, der heißen wäßrigen Adiponitril-Lösung das in Wasser gelöste Hexamethylendiamin zusammen mit einer katalytischen Phosphor-Sauerstoff-Verbindung graduell zuzusetzen (US-Patent 4 520 190) oder eine partielle Hydrolyse des Adiponitrils zu Zwischenprodukten in Gegenwart einer Phosphor-Sauerstoff-Verbindung und fakultativ einer löslichen Kupferverbindung in Abwesenheit oder in Gegenwart von höchstens 10 % des erforderlichen Hexamethylendiamins auszuführen und die Hauptmenge an Diamin erst danach, zu Beginn der Polykondensation einzuspeisen (US-Patent 4 739 035). Als Nachteil erweist sich aber auch hier ein relativ hoher Triamingehalt, der trotz Abwesenheit von Hexamethylendiamin in der partiellen Hydrolyse-Stufe bei über 1000 ppm, bezogen auf Polyamid, liegt (Beispiele 1, 2 und 16).

Aufgabe der vorliegenden Erfindung ist, die bekannten Verfahren zur Herstellung von Polyamiden auf Basis von Dinitrilen so zu verändern, daß vorgenannte Nachteile nicht oder zumindest in geringerem Umfang auftreten. Insbesondere soll spinnfähiges, weitgehendst triaminfreies Polyamid-6.6 aus Adiponitril, Hexamethylendiamin und überschüssigem Wasser in Gegenwart eines katalytischen Systems, das sich auf die Bruttoreaktion zeitverkürzend auswirkt und die Weiterverarbeitung nicht stört, in wirtschaftlicher Weise hergestellt werden.

Die Lösung dieser Aufgabe erfolgt erfindungsgemäß durch ein Verfahren gemäß den Angaben der Patentansprüche. Überraschend wurde gefunden, daß die zur Herstellung der Polyamide zunächst notwendige Hydrolyse des Dinitrils in Gegenwart eines Katalysatorsystems aus mindestens einer sauerstoffhaltigen Säure des Phosphors und/oder mindestens einem wasserlöslichen Calcium-, Zink-, Mangan- oder Cadmiumsalz bei Abwesenheit des Diamins, in schwach saurem Milieu quasi vollständig verläuft. Zur Einstellung des schwach sauren Milieus entsprechend einem Anfangs-pH-Wert im Bereich von 2,0 bis 4,0 dient mindestens eine gesättigte aliphatische oder aromatische Dicarbonsäure, die später in die Polyamid-Kette eingebaut werden kann. Die erforderliche Menge beträgt 10 bis 1000 mmol Säure pro Mol Dinitril.

Das erfindungsgemäße Verfahren ermöglicht die zweistufige kontinuierliche oder diskontinuierliche Herstellung von Polyamiden aus α,ώ-Alkyldinitrilen und α,ώ-Alkyldiaminen sowie überschüssigem Wasser, wobei die Alkylgruppen des Dinitrils und die des Diamins gleich oder verschieden sein können und je 2 bis 12 Kohlenstoffatome bei linearer oder wenig verzweigter Kette aufweisen. Beispiele geeigneter Monomerer sind insbesondere die Dinitrile der Bernsteinsäure, Glutarsäure, Adipinsäure, Korksäure, Sebacinsäure und Decandicarbonsäure sowie die Diamine Tetramethylendiamin, Hexamethylendiamin, Octamethylendiamin, Decamethylendiamin und Dodecamethylendiamin, gegebenenfalls im Gemisch mit geringen Mengen Methylpentamethylendiamin oder Di- oder Trimethylhexamethylendiamin.

Die zur Einstellung des schwach sauren Milieus eingesetzten Dicarbonsäuren sind mit der dem verwendeten Dinitril zugrundeliegenden Dicarbonsäure identisch oder, falls Co-Polyamide erwünscht sind, von diesen verschieden. Beispiele hierfür sind Isophthalsäure und Terephthalsäure. Bevorzugte Monomere sind Adiponitril und Hexamethylendiamin bei Einstellung des pH-Wertes mit Adipinsäure oder Terephthalsäure. Das Diamin wird in mindestens äquimolarer Menge eingesetzt, für Hexamethylendiamin vorzugsweise 1,001 bis 1,15 Mol Diamin pro Mol Adiponitril.

Als katalytisch wirksame phosphorhaltige Säuren seien zu nennen Phosphorsäure (H₃PO₄), unterphosphorige Säure (H₃PO₂) und bevorzugt phosphorige Säure (H₃PO₃).

Als zweite katalytische Komponente kommen alle wasserlöslichen Salze des Calciums, Zinks, Mangans oder Cadmiums in Betracht, vorzugsweise Calciumhypophosphit oder Manganhypophosphit. Zum Einsatz kommen 0 bis 50 mmol, bevorzugt 5 bis 15 mmol phosphorhaltige Säure und 0 bis 20 mmol, bevorzugt 1 bis 5 mmol Salz, jeweils bezogen auf 1 Mol Dinitril, wobei mindestens eine der beiden katalytischen Komponenten vorliegen muß. Der Zusatz anderer anorganischer Säuren, wie beispielsweise Schwefelsäure oder Salzsäure, ist ausgeschlossen.

Das Gemisch aus Dinitril, den beiden Katalysator-Komponenten, einer ausreichenden Menge der Dicarbonsäure und überschüssigem Wasser, vorzugsweise 4,5 bis 6,0 Mol Wasser pro Mol Dinitril, werden unter Rühren, im wesentlichen in Abwesenheit von Sauerstoff (weniger als 10 ppm O₂) unter autogenem Druck solange auf eine Temperatur über 200 °C erhitzt, bis das Dinitril nahezu vollständig, d. h. zu über 99 %, zu Dicarbonsäure hydrolysiert ist. Im Fall von Adiponitril liegt die Temperatur im Bereich von 220 bis 240 °C entsprechend einem autogenen Druck von über 20 bar (absolut). Der Hydrolysegrad kann durch Leitfähigkeitsmessung oder durch chromatographische Ermittlung des nicht umgesetzten Dinitrils bestimmt werden.

Danach wird das Hydrolyse-Gemisch mit mindestens der äquimolaren Menge Diamin, in fein zerkleinerter fester Form oder als wäßrige Lösung, versetzt und die Polykondensation eingeleitet. Wegen der bei höherer Temperatur verstärkt auftretenden Triamin-Bildung wird das Hydrolyse-Gemisch zweckmäßigerweise vor der Diamin-Zugabe auf eine geringere Temperatur abgekühlt. Im Fall von Hexamethylendiamin, welches bei über 190 °C verstärkt zu Dihexamethylentriamin reagiert, wird das Hydrolyse-Gemisch auf eine Temperatur im Bereich von 165 bis 180 °C, vorzugsweise 170 bis 175 °C abgekühlt.

Die Polykondensation erfolgt in an sich bekannter Weise, wobei zunächst bei erhöhtem Druck und steigender Temperatur das gebildete Ammoniak und Wasser abgetrieben werden und nachfolgend unter allmählicher Entspannung bis zum Erhalt von spinnfähigem Polyamid weiterkondensiert wird. Ausgehend von Adiponitril und Hexamethylendiamin werden zunächst bei einem Druck im Bereich von 9 bis 16 bar, bevorzugt 10 bis 15 bar (absolut) bei einer bis höchstens 275 °C, bevorzugt bis höchstens 270 °C ansteigenden Temperatur, unter starkem Erhitzen in maximal 90 Minuten, bevorzugt maximal 60 Minuten, Ammoniak und Wasser abgetrieben. Danach wird unter Beibehaltung der Temperatur innerhalb von 15 bis 30 Minuten auf Atmosphärendruck oder weniger entspannt und schließlich innerhalb von 15 bis 60 Minuten bei einer bis höchstens 290 °C ansteigenden Temperatur bis zum Erreichen von spinnfähigem Polyamid-6.6, entsprechend einer relativen Viskosität im Bereich von 2,2 bis 3,0 (gemessen bei 25 °C an einer 1 %igen Polyamid-Lösung in 96 %iger Schwefelsäure), weiterkondensiert.

Das so erhaltene Polyamid-6.6 zeichnet sich inbesondere durch folgende Eigenschaften aus:
- relative Viskosität von mindestens 2,2, bevorzugt mindestens 2,4 (gemessen bei 25 °C an einer Lösung von 1 g Polyamid in 100 ml 96 %iger Schwefelsäure),
- farbneutral, entsprechend einem Weißgrad (nach ASTM E-313) von mindestens 60 und einem Gelbgrad (nach ASTM D-1925) von weniger als 10,
- geringer Anteil an Abbauprodukten, wie Carbonyl- und Iminoverbindungen, entsprechend einer UV-Transmission von über 90 % (gemessen an einer 2 Gew.-%igen Polyamid-Lösung in destillierter Ameisensäure bei 320 nm bei einer Schichtdicke von 5,0 cm),
- niedriger Triamingehalt von weniger als 600 ppm (durch HPLC-Analyse des Polyamid-Hydrolysats ermittelt),
- gute Verspinnbarkeit, entsprechend weniger als 3 Fadenbrüche pro 24 h während des Verspinnens und Verstreckens.

| **Beispiel 1** | |
|---|---|
| 487 g | Adiponitril |
| 73 g | Adipinsäure |
| 405 g | Wasser |
| 5 g | phosphorige Säure, H₃PO₃ |
| 1,8 g | Calciumhypophosphit, Ca(H₂PO₂)₂ · H₂O |

werden in einem 3-Liter-Druckreaktor mit Heizmantel unter Rühren aufgeheizt, nachdem vorher der Inhalt mit Stickstoff mehrfach inertisiert wurde. Bei einem autogenen Druck von 25 bar verweilt das Reaktionsgemisch 300 Minuten bei 230 °C. Danach wird das Hydrolysat auf eine Temperatur von 175 °C abgekühlt und eine ca. 75 %ige Lösung von 588 g Hexamethylendiamin in destilliertem Wasser mittels Kolbenpumpe zugefahren. Dabei erhöht sich der Druck wieder auf 25 bar. Nach Entspannung auf 10 bar (Überdruck) und Regelung dieses Druckes erfolgt bei Zuschaltung der vollen Leistung des Heizsystems (4 kW) die Ausdampfung der Kondensationsprodukte Ammoniak und Wasser. Innerhalb von 40 Minuten wird dabei eine Produkttemperatur von 270 °C erreicht.
Bei dieser Temperatur wird die Polyamidschmelze innerhalb von 20 Minuten entspannt. Nach weiteren 20 Minuten wird das auf eine relative Viskosität von 2,5 (ηᵣₑₗ) hochkondensierte Polyamid ausgesponnen. Die Endgruppen-Analyse des Polyamides ergibt: -NH₂ 50, -COOH 75, -CONH₂ 11. Der Schmelzpunkt beträgt 261 °C, der Triamingehalt 300 ppm.

| **Beispiel 2** | |
|---|---|
| 513 g | Adiponitril |
| 42 g | Terephthalsäure |
| 430 g | Wasser |
| 1,8 g | Zinksulfat |
| 3,2 g | Calciumhypophosphit, Ca(H₂PO₂)₂ · H₂O |

werden in einem 3-Liter-Druckreaktor mit Heizmantel unter Rühren aufgeheizt, nachdem vorher der Inhalt mit Stickstoff mehrfach inertisiert wurde. Bei einem autogenen Druck von 25 bar verweilt das Reaktionsgemisch 240 Minuten bei 230 °C. Danach wird das Hydrolysat auf eine Temperatur von 175 °C abgekühlt und eine ca. 75 %ige Lösung von 588 g Hexamethylendiamin in destilliertem Wasser mittels Kolbenpumpe zugefahren. Dabei erhöht sich der Druck wieder auf 25 bar. Nach Entspannung auf 10 bar (Überdruck) und Regelung dieses Druckes erfolgt bei Zuschaltung der vollen Leistung des Heizsystems (4 kW) die Ausdampfung der Kondensationsprodukte Ammoniak und Wasser. Innerhalb von 40 Minuten wird dabei eine Produkttemperatur von 270 °C erreicht. Bei dieser Temperatur wird die Polyamidschmelze innerhalb von 20 Minuten entspannt. Nach weiteren 20 Minuten wird das auf eine relative Viskosität von 2,5 (ηᵣₑₗ) hochkondensierte Polyamid ausgesponnen. Die Endgruppen-Analyse des Polyamides ergibt: -NH₂ 75, -COOH 85, -CONH₂ 9. Der Schmelzpunkt beträgt 264 °C, der Triamingehalt 400 ppm.

| **Beispiel 3** | |
|---|---|
| 1070 g | Adiponitril |
| 16,6 g | Terephthalsäure |
| 970 g | Wasser |
| 6,0 g | Manganhypophosphit, Mn(H₂PO₂)₂ |
| 7,4 g | Unterphosphorige Säure, H₃PO₂ |
| 2,3 g | Phosphorige Säure, H₃PO₃ |

werden in einem 6-Liter-Druckreaktor mit Heizmantel unter Rühren aufgeheizt, nachdem vorher der Inhalt mit Stickstoff mehrfach inertisiert wurde. Bei einem autogenen Druck von 25 bar verweilt das Reaktionsgemisch unter Rühren 300 Minuten bei 228 °C. Danach wird das Hydrolysat auf eine Temperatur von 175 °C bei Druckerniedrigung auf weniger als 10 bar (Überdruck) abgekühlt und eine ca. 75 %ige Lösung von 1182 g Hexamethylendiamin in destilliertem Wasser mittels Membranpumpe zugefahren. Dabei erhöht sich der Druck auf wiederum etwa 25 bar. Nach Entspannung auf 10 bar (Überdruck) erfolgt nach Inbetriebnahme der Heizung und Rührung bei diesem Druck die Ausdampfung von Ammoniak und Wasser. Nachdem eine Produkttemperatur von 260 °C erreicht ist, wird der Reaktorinhalt innerhalb von 30 Minuten auf Atmosphärendruck entspannt. Nach weiteren 20 Minuten wird das auf eine Viskosität von 2,6 (ηᵣₑₗ) hochkondensierte Polyamid-6.6 ausgesponnen. Die Endgruppen des Polymeren betragen: -NH₂ 65, -COOH 70, -CONH₂ 12, der Schmelzpunkt 262 °C und der Triamingehalt 330 ppm.

## Patentansprüche

1. Verfahren zur Herstellung von spinnfähigem Polyamid aus α,ώ-[C_{2 bis 12)}-Alkyl] dinitrilen und α,ώ-[C_{2 bis 12)}-Alkyl]diaminen sowie überschüssigem Wasser,
dadurch gekennzeichnet, daß
a) die wäßrige Lösung des Dinitrils in Abwesenheit des Diamins mit einer katalytisch wirksamen Menge mindestens einer sauerstoffhaltigen Säure des Phosphors und/oder mindestens eines wasserlöslichen Calcium-, Zink-, Mangan- oder Cadmium-Salzes versetzt wird und der pH-Wert dieser Lösung auf einen Anfangswert im Bereich von 2,0 bis 4,0 durch Zugabe einer ausreichenden Menge im Bereich von 10 bis 1000 mmol pro Mol Dinitril mindestens einer gesättigten aliphatischen oder aromatischen Dicarbonsäure eingestellt wird und das Dinitril bei einer Temperatur von mindestens 200 °C und autogenem Druck nahezu vollständig zu Dicarbonsäure hydrolysiert wird,
b) die Lösung aus Stufe a) mit mindestens der äquimolaren Menge Diamin versetzt wird, bei erhöhtem Druck und steigender Temperatur das gebildete Ammoniak und Wasser abgetrieben werden und nachfolgend unter allmählicher Entspannung zu spinnfähigem Polyamid polykondensiert wird.

2. Verfahren gemäß Anspruch 1, dadurch gekennzeichnet, daß pro Mol Dinitril als Katalysator 0 bis 50 mmol der sauerstoffhaltigen Säure des Phosphors und 0 bis 20 mmol des Calcium-, Zink-, Mangan- oder Cadmiumsalzes, wobei mindestens eine dieser Komponenten vorliegen muß, zugesetzt werden.

3. Verfahren gemäß Anspruch 1 oder 2, dadurch gekennzeichnet, daß in Stufe a) die wäßrige Lösung pro Mol Dinitril 4,5 bis 6,0 mol Wasser enthält.

4. Verfahren gemäß einem der Ansprüche 1 bis 3, dadurch gekennzeichnet, daß die Dicarbonsäure zur Einstellung des pH-Wertes chemisch gleich der in Stufe a) durch Hydrolyse erhaltenen Dicarbonsäure ist.

5. Verfahren gemäß einem der Ansprüche 1 bis 3, dadurch gekennzeichnet, daß die Dicarbonsäure zur Einstellung des pH-Wertes von der in Stufe a) durch Hydrolyse erhaltenen Dicarbonsäure chemisch verschieden ist und gleichzeitig als Comonomer bei der Herstellung des Polyamids dient.

6. Verfahren gemäß einem der Ansprüche 1 bis 5, dadurch gekennzeichnet, daß das Dinitril Adiponitril und das Diamin Hexamethylendiamin ist.

7. Verfahren gemäß Anspruch 6, dadurch gekennzeichnet, daß Stufe a) bei einer Temperatur im Bereich von 220 bis 240 °C und einem autogenen Druck von über 20 bar ausgeführt wird und in Stufe b) die Lösung zunächst auf eine Temperatur im Bereich von 165 bis 180 °C abgekühlt wird, dann mit 1,001 bis 1,15 Mol Hexamethylendiamin pro Mol Adiponitril versetzt wird und zunächst maximal 90 min bei einer bis höchstens 275 °C ansteigenden Temperatur und einem Druck im Bereich von 9 bis 16 bar (absolut) gehalten wird, nachfolgend unter Beibehaltung der Temperatur innerhalb von 15 bis 30 Minuten auf Atmosphärendruck oder weniger entspannt und schließlich in 15 bis 60 Minuten bei einer Temperatur von maximal 290 °C zu spinnfähigem Polyamid polykondensiert wird.

8. Verfahren gemäß Anspruch 7, dadurch gekennzeichnet, daß Polyamid-6.6 mit einer relativen Viskosität im Bereich von 2,2 bis 3,0 (gemessen bei 25 °C an einer Lösung von 1 g Polyamid in 100 ml 96 %iger Schwefelsäure) erhalten wird.

## Claims

1. A process for preparing spinnable polyamide from α,ω-[C(_{2 to 12)}-alkyl] dinitriles and α,ω-[C(_{2 to 12)}-alkyl] diamines and excess water,
characterised in that
a) a catalytically effective amount of at least one oxygen-containing acid of phosphorus and/or at least one water-soluble calcium, zinc, manganese or cadmium salt is added to the aqueous solution of the dinitrile in the absence of the diamine and the pH of this solution is adjusted to an initial value within the range 2.0 to 4.0 by adding an adequate amount within the range 10 to 1000 mmol per mol of dinitrile of at least one saturated aliphatic or aromatic dicarboxylic acid and the dinitrile is almost completely hydrolysed to a dicarboxylic acid at a temperature of at least 200°C under the autogenic pressure,
b) at least the equimolar amount of diamine is added to the solution from stage a), the ammonia and water which are produced are driven off at elevated pressure and at an increasing temperature and the mixture is then polycondensed to give a spinnable polyamide while the pressure is gradually returned to atmospheric pressure.

2. A process according to Claim 1, characterised in that 0 to 50 mmol of the oxygen-containing acid of phosphorus and 0 to 20 mmol of the calcium, zinc, manganese or cadmium salt per mol of dinitrile are added as catalyst, wherein at least one of these components must be present.

3. A process according to Claim I or 2, characterised in that, in stage a), the aqueous solution contains 4.5 to 6.0 mol of water per mol of dinitrile.

4. A process according to one of Claims 1 to 3, characterised in that the dicarboxylic acid used to adjust the pH is chemically identical to the dicarboxylic acid obtained by hydrolysis in stage a).

5. A process according to one of Claims 1 to 3, characterised in that the dicarboxylic acid used to adjust the pH is chemically different from the dicarboxylic acid obtained by hydrolysis in stage a) and simultaneously acts as a comonomer for preparing the polyamide.

6. A process according to one of Claims 1 to 5, characterised in that the dinitrile is adiponitrile and the diamine is hexamethylene diamine.

7. A process according to Claim 6, characterised in that stage a) is performed at a temperature in the range 220 to 240°C and at an autogenic pressure of greater than 20 bar and in stage b) the solution is first cooled to a temperature in the range 165 to 180°C and then 1.001 to 1.15 mol of hexamethylene diamine per mol of adiponitrile are added and the mixture is initially maintained at a temperature which rises to at most 275°C and at a pressure in the range 9 to 16 bar (absolute) for a maximum of 90 minutes, whereupon the pressure is then decreased to atmospheric pressure or less over the course of 15 to 30 minutes while the temperature is maintained at the same value and finally the mixture is polycondensed to a spinnable polyamide within 15 to 60 minutes at a maximum temperature of 290°C.

8. A process according to Claim 7, characterised in that polyamide-6,6 with a relative viscosity in the range 2.2 to 3.0 (measured at 25°C using a solution of 1 g of polyamide in 100 ml of 96% strength sulfuric acid) is obtained.

## Revendications

1. Procédé pour la préparation de polyamide pouvant être filé à partir d'α,ω'-[alkyle en C₂-C₁₂]dinitriles et d'α,ω'-[alkyle en C₂-C₁₂]diamines ainsi que d'eau en excès,
caractérisé en ce que
a) on ajoute à la solution aqueuse du dinitrile en l'absence de la diamine une quantité catalytiquement efficace d'au moins un acide du phosphore contenant de l'oxygène et/ou d'au moins un sel de calcium, de zinc, de manganèse ou de cadmium soluble dans l'eau et on ajuste la valeur du pH de cette solution à une valeur de départ dans le domaine de 2,0 à 4,0 par addition d'une quantité suffisante dans le domaine de 10 à 1 000 mmol par mol de dinitrile d'au moins un acide dicarboxylique aliphatique ou aromatique saturé et on hydrolyse le dinitrile à une température d'au moins 200°C et à une pression autogène presque complètement en acide dicarboxylique,
b) on ajoute à la solution de l'étape a) au moins la quantité équimolaire de diamine, on évacue sous une pression élevée et à une température croissante l'ammoniaque et l'eau formés et on polycondense après cela sous une détente progressive en polyamide pouvant être filé.

2. Procédé selon la revendication 1, caractérisé en ce que l'on ajoute par mol de dinitrile comme catalyseur de 0 à 50 mmol de l'acide du phosphore contenant de l'oxygène et de 0 à 20 mmol du sel de calcium, de zinc, de manganèse ou de cadmium, au moins un de ces constituants devant être présent.

3. Procédé selon la revendication 1 ou 2, caractérisé en ce que la solution aqueuse contient dans l'étape a) par mol de dinitrile de 4,5 à 6,0 mol d'eau.

4. Procédé selon l'une quelconque des revendications 1 à 3, caractérisé en ce que l'acide dicarboxylique pour l'ajustement de la valeur du pH est chimiquement identique à l'acide dicarboxylique obtenu par hydrolyse dans l'étape a).

5. Procédé selon l'une quelconque des revendications 1 à 3, caractérisé en ce que l'acide dicarboxylique pour l'ajustement de la valeur du pH est chimiquement différent de l'acide dicarboxylique obtenu par hydrolyse dans l'étape a) et sert simultanément de comonomère pour la préparation du polyamide.

6. Procédé selon l'une quelconque des revendications 1 à 5, caractérisé en ce que le dinitrile est l'adiponitrile et la diamine est l'hexaméthylènediamine.

7. Procédé selon la revendication 6, caractérisé en ce que on réalise l'étape a) à une température dans le domaine de 220 à 240°C et à une pression autogène supérieure à 20 bar et on refroidit la solution dans l'étape b) tout d'abord à une température dans le domaine de 165 à 180°C, on ajoute alors de 1,001 à 1,15 mol d'hexaméthylènediamine par mol d'adiponitrile et on maintient tout d'abord pendant 90 min maximum à une température s'élevant jusqu'au plus 275°C et à une pression dans le domaine de 9 à 16 bar (absolus), on détend ensuite en maintenant la température en l'espace de 15 à 30 minutes jusqu'à la pression atmosphérique ou jusqu'à une pression inférieure et on polycondense finalement en de 15 à 60 minutes à une température de 290°C maximum en polyamide pouvant être filé.

8. Procédé selon la revendication 7, caractérisé en ce que l'on obtient du polyamide 6.6 avec une viscosité relative dans le domaine de 2,2 à 3,0 (mesurée à 25°C sur une solution de 1 g de polyamide dans 100 ml d'acide sulfurique à 96%).
